# EUROPÄISCHE PATENTSCHRIFT

(11) **EP 1 741 577 B1**
(45) Veröffentlichungstag und Bekanntmachung des Hinweises auf die Patenterteilung: **19.03.2008**
(21) Anmeldenummer: 06013291.7
(22) Anmeldetag: 28.06.2006
(51) Int. Cl.: B60G 3/20, B60G 7/00

(54) **Radaufhängung für die gelenkten Räder eines Kraftfahrzeuges**
Wheel support for the steerable wheels of a motor vehicle
Suspension de roue pour les roues directrices d'un véhicule automobile

(30) Priorität: 04.07.2005 DE 102005031154
(43) Veröffentlichungstag der Anmeldung: 10.01.2007
(73) Patentinhaber: AUDI AG, 85045 Ingolstadt (DE)
(72) Erfinder: Züge, Frank, 85110 Schelldorf (DE); Krome, Helmut, 85113 Böhmfeld (DE); Hammer, Bernhard, 91790 Nennslingen (DE)
(74) Vertreter: Asch, Konrad

(56) Entgegenhaltungen:
- EP-A- 0 401 547
- EP-A- 1 637 366
- DE-A1- 1 938 850
- DE-A1- 3 809 278
- DE-A1- 4 309 537
- PATENT ABSTRACTS OF JAPAN Bd. 010, Nr. 378 (M-546), 17. Dezember 1986 (1986-12-17) -& JP 61 171604 A (NISSAN MOTOR CO LTD), 2. August 1986 (1986-08-02)

## Beschreibung

Die Erfindung betrifft eine Radaufhängung für die gelenkten Räder eines Kraftfahrzeuges gemäß dem Oberbegriff des Patentanspruches 1.

Eine derartige Radaufhängung zeigt beispielsweise die DE 19 38 850 C3, bei der die oberen und/oder die unteren Lenker der Radführung Einzellenker sind, die in Verbindung mit der Spurstange der Lenkung des Kraftfahrzeuges eine spurstabile Radführung bilden. Der Vorteil einer derartigen Radaufhängung mit aufgelöstem Lenkerverband liegt insbesondere in der Bildung einer virtuellen Lenkachse, die weitgehendst unabhängig von baulichen Zwängen so gelegt werden kann, dass günstige Achswerte wie Radsturz, Nachlauf, Lenkrollradius, Störkrafthebelarm bei angetriebenen Rädern (Maß a), etc. einstellbar sind.

Aus der EP 1 637 366 A1 ist eine gattungsgemäße Radaufhängung bekannt, bei der ein aufgelöster unterer Lenkerverband einen Radträger gelenkig mit dem Aufbau des Kraftfahrzeugs verbindet, und der ein, über eine Spurstange an einem Lenkhebel des Radträgers angreifendes Lenkgetriebe aufweist. Der Lenkerverband weist einen vor einer Druckstrebe angelenkten Querlenker auf, der unter einem Winkel in der Größenordnung von 4° bis 20° gegenüber der Fahrzeug-Querachse nach vorne gepfeilt ist und mit der davor angeordneten Spurstange einen vor Radmitte liegenden Momentanpol bildet, der in Konstruktionslage in Fahrzeug-Querrichtung betrachtet zwischen 100mm und 3000 mm von der Radmitte beabstandet ist. Beim Durchfahren von Kurven führt eine am kurvenäußeren Rad angreifende Seitenkraft zu einer Reduzierung des vom Fahrer vorgegebenen Radlenkwinkels, wodurch das Ansprechen des Fahrzeugs indirekter wird. Außerdem lenkt beim Bremsen in Kurven das kurvenäußere Rad in Nachspur, d. h. dass sich das Fahrzeug durch die Reduzierung des kurvenäußeren Radlenkwinkels stabilisiert.

Aufgabe der Erfindung ist es, eine Radaufhängung der gattungsgemäßen Art derart weiterzubilden, dass deren elastokinematisches Verhalten verbessert und ggf. auf unterschiedliche Fahrsituationen einstellbar ist.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Gemäß dem kennzeichnenden Teil des Patentanspruches 1 ist die Spurstange gegenüber der Fahrzeug-Querachse im Winkelbereich zwischen 0° und 2° nach hinten innen gepfeilt und der vordere Lenker im Winkelbereich zwischen 0° und 4° nach vorne innen gepfeilt. Aufgrund der geringen Pfeilungswinkel verlaufen die Spurstange und der vordere Lenker im wesentlichen quer zur Fahrzeuglängsachse ausgerichtet, wodurch die Spurstabilität bei einer Geradeausfahrt gesteigert ist. Andererseits ist erreicht, dass der Momentanpol fahrzeuginnen vor Radmitte liegt, wobei dessen Abstand zur Radmitte in Fahrzeug-Querrichtung größer als 500 mm.

Die geringe Pfeilung der Spurstange zwischen 0° und 2° hat außerdem zur Folge, dass eine durch Längskräfte bedingte Änderung der Momentanpollage in Querrichtung sich nicht auf das Seitenkraftlenken auswirkt, da der Abstand des Momentanpols von der Radmitte in Längsrichtung unverändert bleibt, und zwar unabhängig von der Position des Momentanpols in Querrichtung. Dies unterstützt die Stabilität bei Kurvenfahrt und insbesondere beim Bremsen in der Kurve.

Der Schnittpunkt zwischen einer verlängerten Wirklinie der Spurstange und der Radmittelebene in der Längsrichtung liegt dabei erfindungsgemäß über einen Abstand von weniger als 140 mm von der Radmitte entfernt. Durch den somit erreichten geringen Abstand der Spurstange zur Radmitte in der Fahrzeuglängsrichtung ist der Hebelarm der Lenkung auf die virtuelle Lenkachse klein. Dies hat den Vorteil einer sehr direkten Lenkübersetzung, die bei der geringen Pfeilung der Spurstange und des vorderen Lenkers über einen großen Lenkwinkelbereich konstant bleibt und eine sehr sportliche Auslegung der Radaufhängung erlaubt. Außerdem ergibt sich aufgrund des reduzierten Abstands der Spurstange zur Radmitte ein Bauraumvorteil dahingehend, dass die Spurstange im Felgenbett tief positioniert werden kann. Analog können das Lenkgetriebe und der Motor ebenfalls abgesenkt werden.

Um den gewünschten Abstand des Momentanpols zur Radmitte bei der geringen Pfeilung des vorderen Lenkers zur Fahrzeug-Querachse zu erreichen, kann erfindungsgemäß die Spurstange mit dem Pfeilungswinkel von kleiner als 2° sehr nahe am Radmittelpunkt (in Längsrichtung gesehen) positioniert sein. Dadurch sind folgende Vorteile realisiert:

Das indirekte Seitenkraftlenken kann über ein im Vergleich zu einem Gelenk weicheres Lager des vorderen Lenkers realisiert werden. Bei einer Erhöhung der Steifigkeit des Lagers nimmt die untersteuernde Tendenz zwar ab, die Stabilität des Fahrzeugs bleibt aber noch erhalten. Dadurch wirkt das Fahrzeug insgesamt agiler. Die geringe Pfeilung des vorderen Lenkers führt zu einer großen Sturzsteifigkeit trotz weichem Querlenkerlager und unterstützt das sportliche Fahrverhalten. Das weiche vordere Lager bietet zudem den Vorteil, dass Anregungen der Straße besser gegenüber dem Aufbau isoliert werden und bringt damit Komfort- und Akustikvorteile.

Beim Bremsen in der Kurve kann sich jedoch aufgrund des weichen vorderen Lenkerlagers am kurvenäußeren Rad die Tendenz zum Vorspurlenken ergeben, wenn das hintere Lenkerlager bei höheren Längskräften versteift. Um dieser Tendenz entgegenzuwirken, kann sich am vorderen Lenker eine Tragfeder mit/ohne Stoßdämpfer abstützen. Die Tragfeder kann dabei vorzugsweise entgegen der Fahrtrichtung angestellt sein. Dadurch wird eine Kraft auf das hintere Lenkerlager ausgeübt, die eine Vorspannung entgegen einer Bremsbelastung erzeugt. Dadurch wird beim Bremsen in der Kurve der Weg des Lagers bis zu seiner Versteifung verlängert und demzufolge eine Verlagerung des Momentanpols reduziert.

Gemäß Vorbeschreibung ist es von Vorteil, wenn der Momentanpol fahrzeuginnen vor Radmitte liegt, wobei der Abstand zur Radmitte in Querrichtung groß, d. h. größer als 500 mm, sein soll. Der Abstand des Momentanpols in Längsrichtung sollte dabei zwischen 80 und 140 mm liegen.

Durch den oben beschriebenen großen Momentanpolabstand zur Radmitte in Querrichtung kann eine Änderung des Radlenkwinkels bei auf das jeweilige Radwirkenden Längskräften vorteilhaft gering gehalten werden. Dies hat den Vorteil, dass beim Bremsen in der Kurve das kurveninnere Rad ebenfalls neutral ist und dadurch ein stabiles Verhalten des Fahrzeugs gewährleistet wird.

In einer weiteren Ausführungsform kann das Lenkgetriebe mit den Spurstangen etwa in Höhe der unteren Lenker und vor der Radmitte der Räder und der unteren, vorderen Lenker angeordnet sein. Bevorzugt ergänzend, aber auch alternativ können die Spurstangen und die unteren, vorderen Lenker in Draufsicht gesehen und in Geradeausfahrtstellung des Kraftfahrzeuges im wesentlichen parallel und quer zur Fahrzeuglängsachse ausgerichtet sein, während die unteren, hinteren Lenker jeweils schräg nach hinten verlaufen. Durch diese Merkmale gelingt es, insbesondere in deren Kombination neben den bereits aufgezählten Vorteilen durch die virtuelle Lenkachse ein in einem weiten Bereich auslegbares Eigenlenkverhalten insbesondere beim Durchfahren von Kurven und bei Bremsvorgängen zu schaffen. Die Anordnung der unteren Lenkerebene mit Spurstange und etwa quer verlaufendem, parallel angeordnetem vorderen Lenker erlaubt, über die Kennwerte (Steifigkeit) der unteren Lenkerlager die Charakteristik der Radaufhängung von sportlich agil bis betont komfortabel auszulegen.

Die Lagersteifigkeiten der vorderen und der hinteren Lenkerlager können zur Einstellung eines unterschiedlichen Fahrverhaltens des Kraftfahrzeuges höher und/oder niedriger ausgelegt sein. Die Lagersteifigkeiten der unteren, vorderen und der unteren, hinteren Lenkerlager können dabei zur Einstellung eines unterschiedlichen Fahrverhaltens des Kraftfahrzeuges von sportlich bis komfortabel mit gleicher oder unterschiedlicher Federrate ausgelegt sein. Bevorzugt weist das vordere Lenkerlager zur Anbindung am Fahrzeugaufbau eine größere Lagersteifigkeit auf als das hintere Lenkerlager.

Baulich besonders günstig können die jeweils innen liegenden, die Lenker mit dem Aufbau verbindenden Lenkerlager mit unterschiedlicher oder gleicher Härte ausgelegt sein; da diese Lenkerlager in der Regel Gummi-Metall-Hülsenlager sind, können sie mit relativ geringem Aufwand und in an sich bekannter Weise entsprechend angepasst bzw. ausgelegt werden.

In vorteilhafter Weiterbildung der Erfindung können die besagten Lenkerlager durch in ihrer Lagersteifigkeit umschaltbare Lenkerlager gebildet sein, die abhängig von fahrspezifischen Parametern über eine elektronische Steuereinheit und/oder manuell umschaltbar sind. Solche Lenkerlager können Gummi-Metall-Hülsenlager mit integrierten Hydraulikkammern und steuerbaren Drosselelementen oder mit rheologischen Flüssigkeiten befüllte Lager sein, deren Steifigkeit veränderbar ist. Die Lenkerlager können dann z. B. bei hoher Geschwindigkeit des Kraftfahrzeuges relativ steif geschaltet werden und damit eine besonders präzise Radführung ermöglichen, während z. B. bei einer niedrigeren Geschwindigkeit und ggf. einer unebenen Fahrbahn die unteren, hinteren Lenkerlager "weicher" geschaltet sind und dementsprechend komfortbetont ausgelegt sind. Gleiches gilt beim Durchfahren von Kurven, bei Bremsmanövern, etc. Die Ansteuerung der Lenkerlager kann über ein ggf. bereits vorhandenes elektronisches Steuergerät erfolgen, in dem einschlägige, fahrdynamische Parameter ausgewertet und die Lagersteifigkeit gesteuert wird.

Ein Ausführungsbeispiel der Erfindung ist im folgenden mit weiteren Einzelheiten näher erläutert. Die schematische Zeichnung zeigt in:
- Fig. 1: in einer raumbildlichen Ansicht schräg von vorne eine linke Radaufhängung für gelenkte und angetriebene Räder eines Kraftfahrzeuges, mit oberen und unteren Lenkern, einem Radträger, einem Federbein, einer Lenkung und einem Stabilisator;
- Fig. 2: eine Seitenansicht auf den Radträger, die unteren Lenker und die Spurstange der Radaufhängung gemäß Fig. 1;
- Fig. 3: eine Draufsicht auf die unteren Lenker, die Spurstange und den Stabilisator der Radaufhängung nach Fig. 1;
- Fig. 4: eine grafische Darstellung der virtuellen Lenkachse und der von der Lenkachse überstrichenen Konusfläche über den Lenkbereich der Radaufhängung;
- Fig. 5: eine grafische Darstellung des Momentandrehpols der unteren Lenker mit Radträger bei Längs- und Seitenkräften auf die Radaufhängung; und
- Fig. 6: in einer grob schematischen Prinzipdarstellung der untere Lenkerverband mit dem Radträger und der Spurstange.

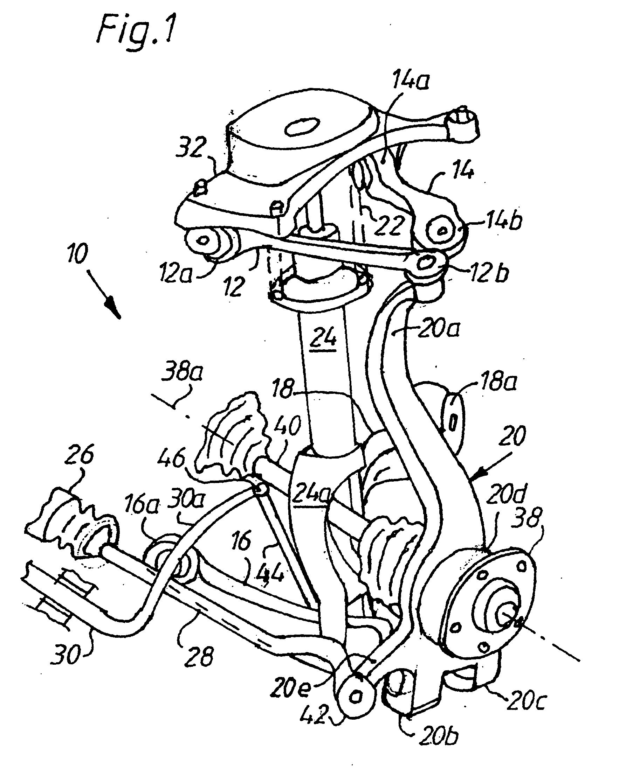

In den Fig. 1 bis 3 ist eine vordere, linke Radaufhängung 10 für Kraftfahrzeuge dargestellt, die sich im wesentlichen aus zwei oberen einzelnen Lenkern 12, 14, zwei unteren einzelnen Lenkern 16, 18, einem Radträger 20, einem aus einer Tragfeder 22 und einem Teleskopstoßdämpfer 24 gebildeten Federbein, einem Zahnstangenlenkgetriebe 26 mit Spurstangen 28 und einem U-förmigen Stabilisator 30 zusammensetzt. Der Stoßdämpfer 24 ist dabei entgegen der Fahrtrichtung F angestellt.

Das Zahnstangenlenkgetriebe 26 ist bekannter Bauart und nur angedeutet dargestellt. Die rechte Radaufhängung 10 sowie der quer verlaufende Stabilisator 30 sind spiegelbildlich gleich ausgeführt.

Die oberen Lenker 12, 14 sind wie ersichtlich in einem definierten Winkel zueinander angeordnet und über innere Lagerstellen 12a, 14a an einer Lagerkonsole 32 angelenkt. An der Lagerkonsole 32 ist ferner das Federbein 22, 24 gelenkig abgestützt. Die Lagerkonsole 32 ist mittels mehrerer Schrauben (nicht dargestellt) mit dem Aufbau des Kraftfahrzeuges fest verbunden.

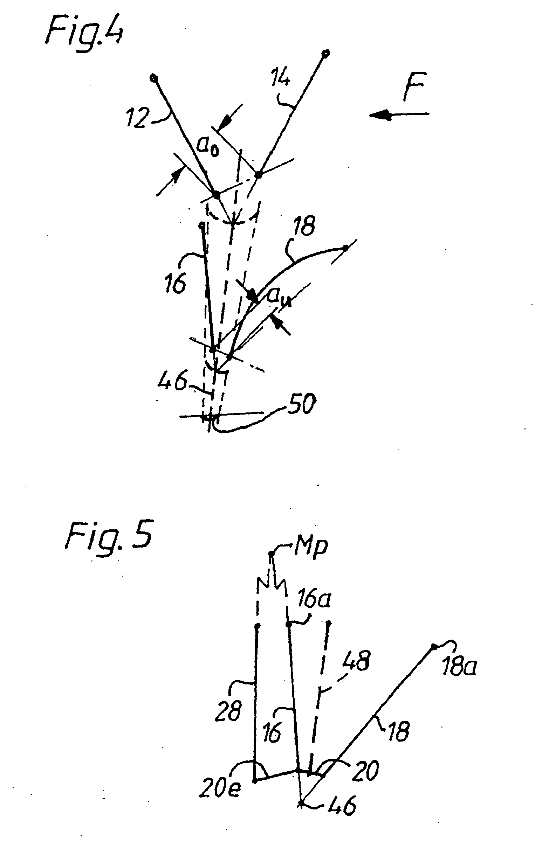

Die äußeren, als Kugelgelenke ausgebildeten Lagerstellen 12b, 14b der Lenker 12, 14 sind oberhalb des Rades (nicht dargestellt) des Kraftfahrzeuges an einem nach oben geführten Arm 20a des Radträgers 20 in einem definierten Koppelabstand aₒ angelenkt (vgl. **Fig. 4**). Der Arm 20a ist dabei zur Bereitstellung eines ausreichenden Freiganges des Rades nach innen gekrümmt ausgeführt.

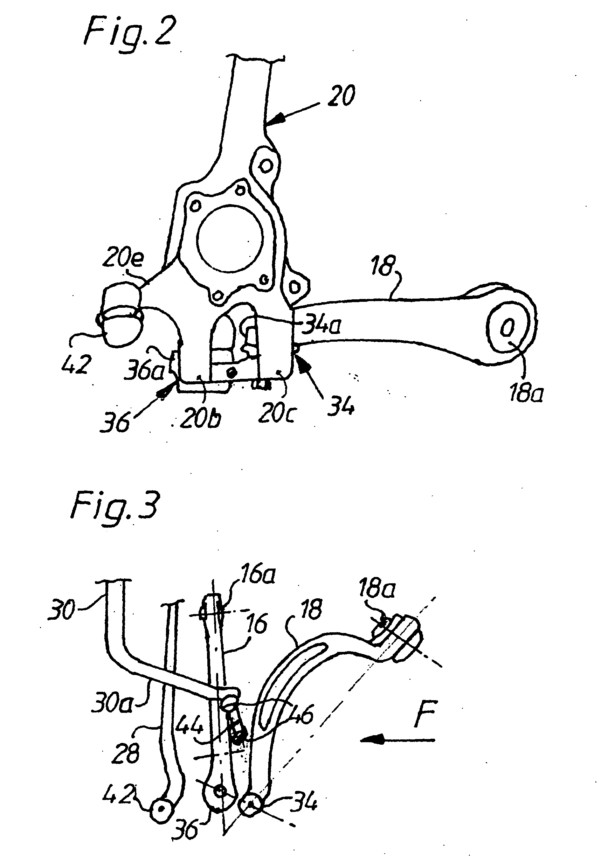

Die unteren Lenker 16, 18 sind einerseits über Lenkerlager 16a, 18a mit dem nicht dargestellten Aufbau des Kraftfahrzeuges gelenkig verbunden und andererseits an unteren Aufnahmen 20b, 20c des Radträgers 20 über Kugelgelenke 34, 36 (vgl. **Fig. 2**) in einem Koppelabstand aᵤ angelenkt. Die Aufnahmen 20b, 20c liegen relativ nahe unterhalb der Raddrehachse 38a, die durch die nicht dargestellte Radlagerung innerhalb eines nabenförmigen Abschnittes 20d des Radträgers 20 und einem drehbar gelagerten Radflansch 38 definiert ist. Der Radflansch 38 ist mit einer Antriebswelle 40 zum Antrieb des Rades trieblich verbunden.

Der vordere, untere Lenker 16 bildet dabei den entsprechend verstärkt ausgelegten Traglenker der Radaufhängung 10, an dem ein gabelförmiger Abschnitt 24a des Teleskopstoßdämpfers 24 in relativer Nähe zu den Aufnahmen 20b, 20c des Radträgers 20 angelenkt ist. Der Abschnitt 24a umgreift dabei den Lenker 16 und ist unter Zwischenschaltung eines gummielastischen Lagers (nicht dargestellt) mit einer den Lenker 16 und die Schenkel des gabelförmigen Abschnittes 24a durchdringenden Schraube mit dem Lenker 16 verbunden. Wie ersichtlich ist, ist auch die Antriebswelle 40 durch den Abschnitt 24a hindurchgeführt.

Der vordere, untere Lenker 16 ist im wesentlichen quer zur Längsrichtung des Kraftfahrzeuges ausgerichtet, während der hintere, untere Lenker 18 in einem Winkel von ca. 45 Grad zum vorderen Lenker 16 angeordnet ist (vgl. **Fig. 3**). Durch die dargestellte, relativ starke Krümmung des Lenkers 18 nach innen ist der Freigang des Rades beim vollen Lenkeinschlag des Rades sichergestellt.

Das Zahnstangenlenkgetriebe 26 mit der abtreibenden Spurstange 28 ist in Fahrtrichtung F des Kraftfahrzeuges gesehen vor dem Lenker 16 im wesentlichen in der durch die unteren Lenker 16, 18 gebildeten Horizontalebene angeordnet, wobei die Spurstange 28 etwa parallel bzw. leicht gepfeilt zum Lenker 16 ausgerichtet ist. Die Spurstange 28 ist über ein Kugelgelenk 42 mit dem nach vorne ragenden Lenkarm 20e des Radträgers 20 verbunden.

Noch räumlich vor dem Lenkgetriebe 26 ist der U-förmige Stabilisator 30 am Aufbau des Kraftfahrzeuges drehbar gelagert, dessen im wesentlichen in Längsrichtung verlaufender Schenkel 30a die Spurstange 28 und den Lenker 16 quert und über eine nach unten ragende Koppelstange 44 und über Gelenke, z. B. Gummilager oder Kugelgelenke 46 beispielsweise mit dem gabelförmigen Abschnitt 24a des Stoßdämpfers 24 verbunden ist. Die Anlenkstelle der Koppelstange 44 am gabelförmigen Abschnitt 24a ist auf der Zeichnung nicht ersichtlich. Die Schenkel 30a des Stabilisators 30 sind derart nach oben und seitlich gekrümmt ausgeführt, dass der Freigang des Rades beim Lenkeinschlag und der Freigang der Spurstange 28 und des Lenkers 16 beim Durchfedern des Rades gewährleistet sind.

Durch die Ausrichtung der mit dem Stabilisator 30 verbundenen Koppelstange 44, die unmittelbar an den gabelförmigen Abschnitt 24a des Stoßdämpfers 24 angrenzt, wobei die Koppelstange 44 etwa parallel zur noch zu beschreibenden Lenkachse 46 ausgerichtet ist, werden bei gleichseitigem und wechselseitigem Einfedern der Räder des Kraftfahrzeuges Einflüsse auf das Lenkverhalten nahezu eliminiert. Die Koppelstangen 44 sind dabei - wie in **Fig. 1** ersichtlich - in Rückansicht des Kraftfahrzeuges nach oben innen und in Seitenansicht nach oben vorne ausgerichtet.

Die virtuelle Lenkachse 46 der Radaufhängung 10 (vgl. **Fig. 4**) definiert sich aus der räumlichen Anordnung der Lenker 12, 14, 16, 18 und den Koppelabständen aₒ und aᵤ der entsprechenden Lagerstellen 12b, 14b bzw. den Gelenkmittelpunkten der Kugelgelenke 34, 36. Dabei ergibt sich die virtuelle Lenkachse 46 in der Geradeausfahrtstellung der Räder des Kraftfahrzeuges aus den windschief zueinander stehenden, gedachten Geraden durch die oberen und unteren Lenkerlagerungen in der Art, dass in Blickrichtung der Lenkachse alle vier Geraden einen Schnittpunkt bilden.

Beim Einlenken der Räder über den Lenkbereich (voller Linkseinschlag bis voller Rechtseinschlag) überstreicht die Lenkachse 46 eine gedachte Konusfläche, die nach unten zur Radaufstandsebene des Rades zu abnimmt. Diese Kinematik der Lenkachse 46 ergibt sich dadurch, dass der obere Koppelabstand aₒ in der Projektion in Richtung der virtuellen Lenkachse 46 gesehen größer ist als der untere Koppelabstand aᵤ zwischen den entsprechenden Lagerstellen 12b, 14b bzw. den Kugelgelenkpunkten 34, 36. Der tatsächliche, räumliche obere Koppelabstand aₒ ist dagegen kleiner als der tatsächliche, räumliche untere Koppelabstand aᵤ.

Der obere Koppelabstand aₒ bestimmt sich in der Regel aus den baulichen Gegebenheiten und kann z.B. nicht kleiner ausgeführt sein, als dies die anzuordnenden Lagerstellen 12b, 14b (Kugelgelenke) zulassen.

Bei der Auslegung des unteren Koppelabstandes aᵤ ist noch zu berücksichtigen, dass der untere, vordere Lenker 16 als Traglenker ein größeres Kugelgelenk 36 erfordert, was der Vorgabe eines kleinen Koppelabstandes aᵤ an sich entgegensteht. Um trotzdem den gewünschten Koppelabstand aᵤ zu schaffen, sind die Kugelgelenke 34, 36 (vgl. **Fig. 2**) höhenversetzt zueinander und mit um 180 Grad zueinander verdrehten Kugelgelenken 34, 36 angeordnet; d. h., dass das Gehäuse 36a des Kugelgelenkes 36 unten in der Aufnahme 20b des Radträgers 20 positioniert ist, während das Gehäuse 34a darüber liegend in den Lenker 18 integriert ist. Die Gelenkzapfen (ohne Bezugszeichen) der Kugelgelenke 34, 36 ragen demzufolge entgegengesetzt ausgerichtet nach oben (Kugelgelenk 36) bzw. nach unten (Kugelgelenk 34).

Dies bewirkt eben, dass in der Projektion entlang der Lenkachse 46 gesehen der untere Koppelabstand aᵤ kleiner ist als der obere Koppelabstand aₒ mit der vorbeschriebenen Auswirkung auf die über den Lenkbereich sich ergebende Konusfläche der virtuellen Lenkachse 46.

Ferner ist die Anordnung der Lagerstellen bzw. Kugelgelenke 34, 36 des unteren Lenkers 16 am Radträger 20 derart ausgelegt, dass sich über den gesamten Lenkbereich der Radaufhängung eine überwiegend in Längsrichtung des Kraftfahrzeuges ausgerichtete Schnittfläche der von der Lenkachse 46 überstrichenen Konusfläche an der Radaufstandsfläche ergibt (vgl. Neigung der Geraden durch die Kugelgelenkmitten der Kugelgelenke 34, 36 in **Fig. 3** gegenüber der Fahrzeuglängsrichtung). Daraus resultiert eine verbesserte Lenkungsrückstellung der eingeschlagenen Räder in die Geradeausfahrtstellung, die die Lenkungsrückstellung ausgeübt von dem auf den vorderen, unteren Lenker 16 abgestützten Federbein 22, 24 unterstützt.

Die inneren Lenkerlager 16a, 18a der unteren Lenker 16, 18 sind in ihrer Federsteifigkeit unterschiedlich ausgelegt oder bevorzugt umschaltbare Gummi-Metall-Hülsenlager, die hydraulisch durch integrierte Hydraulikkammern und veränderbare Drosselelemente oder elektrisch mittels Befüllung mit einer rheologischen Flüssigkeit beaufschlagt sind. Derartige Lager sind an sich bekannt. Die Lenkerlager 16a, 18a werden abhängig von fahrspezifischen Parametern wie z. B. Geschwindigkeit des Kraftfahrzeuges, Fahrbahnzustand, Lenk- und Bremsreaktionen, Gierrate, Querbeschleunigung, Lenkwinkel der Räder, Beladungszustand, etc. über ein elektronisches Steuergerät (z. B. ESP) und/oder manuell umgeschaltet, um das Fahrverhalten des Kraftfahrzeuges von sportlich agil bis betont komfortabel einzustellen. Gegebenenfalls kann auch nur das Lenkerlager 18a umschaltbar ausgebildet sein.

Die **Fig. 5** zeigt dazu, dass abhängig von den Lagersteifigkeiten der Lenkerlager 16a, 18a, in Verbindung mit der Ausrichtung der ebenfalls einen "steifen" Lenker darstellenden Spurstange 28 der Momentanpol Mp der unteren Lenker 16, 18 und des Radträgers 20 verändert und das Fahrverhalten des Kraftfahrzeuges von Übersteuernd in Untersteuernd bei Längs- und Seitenkräften ausgelegt werden kann.

Die Lage des Momentanpols Mp lässt sich zusätzlich aus der Pfeilung der unteren Lenker 16, 18 im Zusammenspiel mit der Spurstange 28 beeinflussen. Solange das Verhältnis der Steifigkeiten zwischen dem Lenkerlager 16a des quer abstützenden, vorderen Lenkers 16 zum Lenkerlager 18a des längs abstützenden, hinteren Lenkers 18 groß ist, kann letzterer in der Betrachtung vernachlässigt werden. Damit ergibt sich der Momentanpol als Schnittpunkt der Wirklinien von Spurstange 28 und vorderem, unteren Lenker 16, wobei die Pfeilung derart ist, dass sich der Abstand zwischen der Spurstange 28 und dem Lenker 16 in der Draufsicht gesehen der senkrechten Fahrzeugmittelebene zu verjüngt.

Damit führt sowohl eine Längs- als auch eine Seitenkraft auf das Rad zu einer Spurwinkeländerung in Richtung Nachspur - das Fahrzeug reagiert im elastokinematischen Bereich untersteuernd. Gleichzeitig hat die Radaufhängung 10 aufgrund der geringeren Steifigkeit des unteren, hinteren Lenkerlagers 18a eine hohe Nachgiebigkeit in Längsrichtung, was sich bei einer Hindernisüberfahrt positiv im Komfort bemerkbar macht.

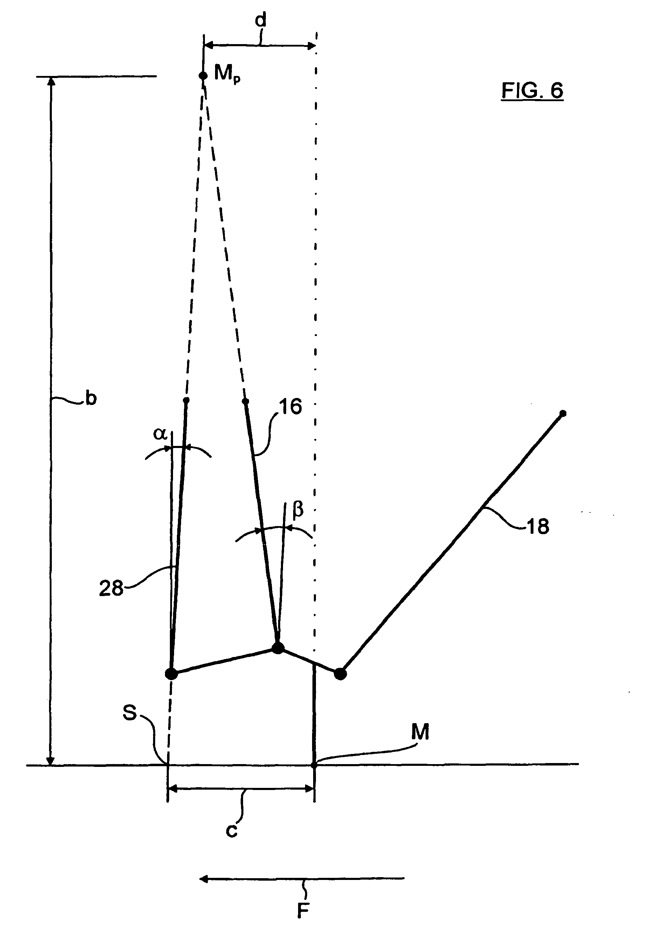

In der **Fig. 6** ist die Radaufhängung mit ihren unteren Lenkern 16 und 18 sowie der Spurstange 28 und dem Radträger 20 in der Geradeausfahrtstellung gezeigt. Demzufolge ist die Spurstange 28 zur Bildung des Momentanpols Mₚ gegenüber der Fahrzeug-Querachse im Winkelbereich α zwischen 0° und 2° nach hinten gepfeilt und gleichzeitig der vordere Lenker 16 in einem Winkelbereich β zwischen 0° und 4° nach vorne innen gepfeilt. Dadurch ergibt sich vorteilig, dass der Momentanpol Mp fahrzeuginnen über einen Abstand d zwischen 80 mm und 140 mm vor Radmitte M liegt.

Der Abstand c von der Radmitte 11 zum Schnittpunkts zwischen der verlängerten Wirklinie der Spurstange 28 und der Radmittelebene in der Längsrichtung liegt in einem Bereich zwischen 80 mm und 140 mm, hier im konkreten Ausführungsbeispiel bei 120 mm. Im Zusammenhang mit der geringen Pfeilung des vorderen Lenkers 16 liegt der Momentanpol Mp in allen Betriebslagen vorteilhaft vor der Fahrzeugquerebene durch die Radmitte.

Wird die Steifigkeit des hinteren Lenkerlagers 18a merklich erhöht - entweder durch entsprechende Ansteuerung des umschaltbaren Lenkerlagers 18a oder durch entsprechende konstruktive Auslegung - so kann der Lenker 18 in der Betrachtung des Momentanpols Mp nicht mehr vernachlässigt werden. Die Lage des Momentanpols Mp ergibt sich nun aus der Ausrichtung der Spurstange 28 und einem virtuellen Ersatzlenker 48 (**Fig. 5****,** gestrichelt eingezeichnet), der sich aus dem Steifigkeitsverhältnis der unteren Lenkerlager 16a, 18a ableiten lässt.

Gleichzeitig kann mit dem Steifigkeitsniveau der beiden unteren Lenker 16, 18 der Längs- und Seitenkrafteinfluss auf die Änderung des Spurwinkels des Rades begrenzt werden.

Die Erfindung ist nicht auf das beschriebene Ausführungsbeispiel beschränkt. So kann anstelle der oberen Lenker 12, 14 auch ein dreieckförmiger Querlenker verwendet sein. Anstelle eines Zahnstangenlenkgetriebes 26 kann auch eine andere Lenkung mit entsprechend angeordneten Spurstangen 28 eingesetzt sein.

## Patentansprüche

1. Radaufhängung für die gelenkten Räder eines Kraftfahrzeuges, mit je Rad zumindest einem oberen Lenker (12, 14) und zwei separaten unteren Lenkern (16, 18), die in jeweils einem definierten Winkel zueinander angeordnet sind und einerseits mit dem Aufbau des Kraftfahrzeuges und andererseits mit einem Radträger (20) gelenkig verbunden sind, sowie mit einem über jeweils eine vor dem vorderen unteren Lenker (16) liegende Spurstange (28) an einem Lenkhebel (20e) des Radträgers (20) angreifenden Lenkgetriebe (26),
wobei die Spurstange (28) und der untere, vordere Lenker (16) in Draufsicht gesehen und in Geradeausfahrtstellung des Kraftfahrzeuges im wesentlichen quer zur Fahrzeuglängsachse ausgerichtet sind, und zur Bildung eines definierten Momentanpols (Mₚ) der unteren Lenkerebene mit dem Radträger (20) zueinander leicht gepfeilt angeordnet sind, wobei der Momentanpol (Mp) mit einem Abstand (b) von über 500 mm in der Fahrzeugquerrichtung von der Radmitte (M) entfernt ist,
**dadurch gekennzeichnet,**
**dass** die Spurstange (28) gegenüber der Fahrzeug-Querachse in einem Winkelbereich (a) zwischen 0° und 2° nach hinten innen gepfeilt und der vordere Lenker (16) gegenüber der Fahrzeug-Querachse in einem Winkelbereich (β) zwischen 0° und 4° nach vorne innen gepfeilt sind, und
**dass** ein Schnittpunkt (S) zwischen einer verlängerten Wirklinie der Spurstange (28) und der Radmittelebene in der Fahrzeug-Längsrichtung (F) über einen Abstand (c) von weniger als 140 mm von der Radmitte (M) entfernt ist.

2. Radaufhängung nach Anspruch 1, **dadurch gekennzeichnet, dass** der Momentanpol (Mp) in einem Bereich von über 3000 mm in Fahrzeugquerrichtung von der Radmitte beabstandet ist.

3. Radaufhängung nach Anspruch 1 oder 2, **dadurch gekennzeichnet, dass** ein Schnittpunkt (S) zwischen einer verlängerten Wirklinie der Spurstange (28) und der Radmittelebene in der Fahrzeug-Längsrichtung (F) über einen Abstand (c) zwischen 80 mm und 130 mm von der Radmitte entfernt ist.

4. Radaufhängung nach einem der vorhergehenden Ansprüche, **dadurch gekennzeichnet, dass** der vordere Lenker (16) einen Traglenker der Radaufhängung bildet, auf dem eine Tragfeder (22) mit/ohne Stoßdämpfer (24) abgestützt ist.

5. Radaufhängung nach Anspruch 4, **dadurch gekennzeichnet, dass** die Tragfeder (22) entgegen der Fahrtrichtung (F) angestellt ist.

6. Radaufhängung nach einem der vorhergehenden Ansprüche, **dadurch gekennzeichnet, dass** ein vorderes Lenkerlager (16a) mit Bezug auf ein Gelenk mit niedriger Lagersteifigkeit ausgelegt ist.

7. Radaufhängung nach einem der vorhergehenden Ansprüche, **dadurch gekennzeichnet, dass** das Lenkgetriebe (26) mit der Spurstange (28) etwa in Höhe des unteren Lenkers (16, 18) angeordnet ist.

8. Radaufhängung nach einem der vorhergehenden Ansprüche, **dadurch gekennzeichnet, dass** die Lagersteifigkeiten der vorderen und der hinteren unteren Lenkerlager (16a, 18a) zur Einstellung eines unterschiedlichen Fahrverhaltens des Kraftfahrzeuges, von sportlich bis komfortabel mit gleicher oder unterschiedlicher Federrate ausgelegt sind.

9. Radaufhängung nach einem der vorhergehenden Ansprüche, **dadurch gekennzeichnet, dass** zumindest jeweils eines der besagten Lenkerlager (16a, 18a) durch in ihrer Lagersteifigkeit umschaltbare Lenkerlager gebildet sind, die abhängig von fahrspezifischen Parametern über eine elektronische Steuereinheit und/oder manuell umschaltbar sind.

## Claims

1. Wheel suspension for the steerable wheels of a motor vehicle, with each wheel having at least one upper connecting rod (12, 14) and two separate lower connecting rods (16,18), which are respectively arranged in a defined angle to each other and on the one hand are articulatedly connected to the body of the motor vehicle and on the other hand to a wheel carrier (20), as well as to a steering gear (26), which acts upon a steering arm (20e) of the wheel carrier (20) via a tie rod (28) located in front of the front, lower connecting rod (16).
in which the tie rod (28) and the lower, front connecting rod (16) when seen from above and in the straight driving position of the motor vehicle are aligned essentially transversely to the motor vehicle's longitudinal axis and in order to form a defined instant centre (Mp) of the lower connecting rod level with the wheel carrier (20) are arranged in a slightly swept position in relation to each other, in which the instant centre (Mp) is spaced at a distance (b) of more than 500 mm from the wheel centre (M) in the transverse direction of the motor vehicle,
**characterised in that**,
the tie rod (28) is in a back swept position towards the inside in an angular range (α) between 0° and 2° in relation to the transverse axis of the vehicle and the front connecting rod (16) is in a forward swept position towards the inside in an angular range (β) between 0° and 4° in relation to the transverse axis of the vehicle, and that an intersection point (S) between an extended line of action of the tie rod (28) and the wheel's central plane in the longitudinal direction (F) of the motor vehicle is spaced at a distance (c) of less than 140 mm from the wheel centre (M).

2. Wheel suspension according to claim 1, **characterised in that** the instant centre (Mp) is at a distance in a range of more than 3000 mm from the wheel centre (M) in the transverse direction of the motor vehicle.

3. Wheel suspension according to claim 1 or 2, **characterised in that** an intersection point (S) between an extended line of action of the tie rod (28) and the wheel's central plane in the longitudinal direction (F) of the motor vehicle is spaced at a distance (c) of between 80 mm and 130 mm from the wheel centre.

4. Wheel suspension according to one of the foregoing claims, **characterised in that** the front connecting rod (16) constitutes a supporting rod of the wheel suspension, on which a suspension spring (22) is supported with / without shock absorbers (24).

5. Wheel suspension according to claim 4, **characterised in that** the suspension spring (22) is engaged against the direction of travel (F).

6. Wheel suspension according to one of the foregoing claims, **characterised in that** a front connecting rod bearing (16a) is designed with a lower bearing rigidity with reference to one joint.

7. Wheel suspension according to one of the foregoing claims, **characterised in that** the steering gear (26) with the tie rod (28) is arranged approximately at the height of the lower connecting rod (16, 18).

8. Wheel suspension according to one of the foregoing claims, **characterised in that** the bearing rigidities of the front and the back lower connecting rod bearings (16a, 16b) for setting the various driving characteristics of the motor vehicle from sporty to easy-to-operate are designed with the same or different spring rate.

9. Wheel suspension according to one of the foregoing claims, **characterised in that** at least one of the said connecting rod bearings (16a, 18a) are constituted by connecting rod bearings, which have switchable bearing rigidity, which can be switched via an electronic control unit and / or manually, depending on the drive specific parameters.

## Revendications

1. Suspension de roue pour les roues directrices d'un véhicule automobile, comportant pour chaque roue au moins un bras supérieur (12, 14) et deux bras inférieurs (16, 18) séparés, qui sont agencés les uns par rapport aux autres selon un angle chaque fois défini et sont reliés de manière articulée d'un côté à la carrosserie du véhicule automobile et de l'autre côté à un support de roue (20), et comportant un mécanisme de direction (26) venant en prise avec le levier de direction (20e) du support de roue (20) via respectivement une barre d'accouplement (28) située devant le bras inférieur avant (16),
dans laquelle la barre d'accouplement (28) et le bras inférieur avant (16) vus en élévation et en position de circulation en ligne droite du véhicule automobile sont dirigés essentiellement transversalement à l'axe longitudinal du véhicule et sont disposés légèrement en flèche l'un par rapport à l'autre pour former un centre instantané de rotation (Mₚ) défini du plan de bras inférieur avec le support de roue (20), le centre instantané de rotation (Mp) étant éloigné du centre de roue (M) d'une distance (b) supérieure à 500 mm dans la direction transversale du véhicule,
**caractérisée en ce que**
la barre d'accouplement (28) est disposée en flèche à l'intérieur vers l'arrière par rapport à l'axe transversal du véhicule dans une plage angulaire (α) comprise entre 0° et 2° et le bras avant (16) est disposé en flèche à l'intérieur vers l'avant par rapport à l'axe transversal du véhicule dans une plage angulaire (β) comprise entre 0° et 4°, et
**en ce qu'**un point d'intersection (S) entre un prolongement de la ligne d'action de la barre d'accouplement (28) et le plan médian de roue dans la direction longitudinale du véhicule (F) est espacé du centre de roue (M) d'une distance (c) inférieure à 140 mm.

2. Suspension de roue selon la revendication 1, **caractérisée en ce que** le centre instantané de rotation (Mₚ) est distant du centre de roue dans une plage supérieure à 3000 mm dans la direction longitudinale du véhicule.

3. Suspension de roue selon la revendication 1 ou 2, **caractérisée en ce qu'**un point d'intersection (S) entre un prolongement de la ligne d'action de la barre d'accouplement (28) et le plan médian de roue dans la direction longitudinale du véhicule (F) est espacé du centre de roue d'une distance (c) comprise entre 80 mm et 130 mm.

4. Suspension de roue selon l'une quelconque des revendications précédentes, **caractérisée en ce que** le bras avant (16) forme un bras porteur de la suspension de roue sur lequel un ressort de suspension (22) est appuyé avec / sans amortisseur de chocs (24).

5. Suspension de roue selon la revendication 4, **caractérisée en ce que** le ressort de suspension (22) est mis en place dans le sens contraire au sens de la marche (F).

6. Suspension de roue selon l'une quelconque des revendications précédentes, **caractérisée en ce qu'**un palier de bras avant (16a) est conçu en ce qui concerne une articulation avec une rigidité de palier plus faible.

7. Suspension de roue selon l'une quelconque des revendications précédentes, **caractérisée en ce que** le mécanisme de direction (26) avec la barre d'accouplement (28) est disposé à peu près à hauteur du bras inférieur (16, 18).

8. Suspension de roue selon l'une quelconque des revendications précédentes, **caractérisée en ce que** les rigidités des paliers de bras inférieurs avant et arrière (16a, 18a) sont conçues pour le réglage d'un comportement différent du véhicule automobile, allant de la conduite sportive à la conduite confortable avec une constante de ressort identique ou différente.

9. Suspension de roue selon l'une quelconque des revendications précédentes, **caractérisée en ce que** au moins respectivement l'un desdits paliers de bras (16a, 18a) est formé par des paliers de bras commutables en termes de rigidité de palier qui sont commutables en fonction de paramètres spécifiques à la conduite via une unité de commande électronique et/ou manuellement.
